# EUROPÄISCHE PATENTSCHRIFT

(11) **EP 1 435 096 B1**
(45) Veröffentlichungstag und Bekanntmachung des Hinweises auf die Patenterteilung: **05.09.2007**
(21) Anmeldenummer: 02774397.0
(22) Anmeldetag: 20.09.2002
(51) Int. Cl.: G11B 27/00, G11B 27/11, G11B 27/34

(54) **ABSPIELGERÄT FÜR SPEICHERMEDIEN**
PLAYBACK DEVICE FOR STORAGE MEDIA
LECTEUR DE SUPPORTS D'ENREGISTREMENT

(30) Priorität: 04.10.2001 DE 10148856
(43) Veröffentlichungstag der Anmeldung: 07.07.2004
(73) Patentinhaber: ROBERT BOSCH GMBH, 70442 Stuttgart (DE)
(72) Erfinder: BECKER, Volker, 31139 Hildesheim (DE); ZIMMERMANN, Holger, 31141 Hildesheim (DE)
(86) Internationale Anmeldenummer: PCT/DE2002/003545
(87) Internationale Veröffentlichungsnummer: WO 2003/032318

(56) Entgegenhaltungen:
- EP-A- 0 908 884
- DE-A- 10 014 987
- US-A- 6 134 192
- SVEN HANSEN, PETER MONNERJAHN, PETER NONHOFF-ARPS: "Mobiles Musikarchiv" C'T MAGAZIN FÜR COMPUTER TECHNIK 17/2001, 13. August 2001 (2001-08-13), Seiten 84-91, XP002230306

## Beschreibung

### Stand der Technik

Die Erfindung geht von einem Abspielgerät für Speichermedien nach der Gattung des Hauptanspruchs aus.

Es sind bereits Abspielgeräte für Speichermedien in Form von Compact-Disc-Wechslern bekannt, bei denen bei einer Eingabeeinheit einerseits zwischen verschiedenen Compact-Disc ausgewählt werden kann und andererseits eine Titelauswahl auf der ausgewählten Compact-Disc möglich ist. Die ausgewählte Compact-Disc wird dann in eine Abspielposition gebracht. Eine Lesekopfsteuerung positioniert daraufhin einen Lesekopf, beispielsweise am Beginn des ausgewählten Titels der abzuspielenden Compact-Disc, um ein Abspielen dieses Titels zu ermöglichen.

### Vorteile der Erfindung

Das erfindungsgemäße Abspielgerät für Speichermedien mit den Merkmalen des Hauptanspruchs hat demgegenüber den Vorteil, dass eine Umsetzvorrichtung vorgesehen ist, die bei Überschreiten eines vorgegebenen Wertes durch die Anzahl von Datengruppen auf dem ersten Speichermedium mindestens zwei Teilmengen aus der Anzahl von Datengruppen des ersten Speichermediums bildet, wobei jede dieser Teilmengen an der Eingabeeinheit als unterschiedliches Speichermedium auswählbar ist, und dass die Umsetzvorrichtung die Lesekopfsteuerung in Abhängigkeit der als Speichermedium an der Eingabeeinheit ausgewählten Teilmenge zur Positionierung des Lesekopfes ansteuert. Auf diese Weise läßt sich ein Speichermedium mit einer großen Anzahl von Datengruppen für den Benutzer übersichtlicher verwalten und die entsprechenden Datengruppen gezielter auswählen. Dies gilt besonders für Speichermedien, auf denen Daten in komprimierter Form gespeichert sind und die deshalb die Aufnahme großer Datenmengen ermöglichen.

Durch die in den Unteransprüchen aufgeführten Maßnahmen sind vorteilhafte Weiterbildungen und Verbesserungen des im Hauptanspruchs angegebenen Abspielgerätes für Speichermedien möglich.

Besonders vorteilhaft ist es, dass die Umsetzvorrichtung prüft, ob ein an der Eingabeeinheit ausgewähltes Speichermedium mindestens ein zweites Speichermedium oder eine Teilmenge von Datengruppen des ersten Speichermediums ist und in Abhängigkeit des ausgewählten Speichermediums entweder das erste Speichermedium oder das mindestens eine zweite Speichermedium in eine Abspielposition bringt. Auf diese Weise läßt sich ein Mischbetrieb für das Abspielgerät realisieren, bei dem sowohl verschiedene Speichermedien zum Verbringen in die Abspielposition auswählbar sind als auch verschiedene virtuelle Speichermedien, deren Daten auf einem einzigen, in die Abspielposition verbringbaren Speichermedium abgelegt sind.

Vorteilhaft ist auch, dass die Umsetzvorrichtung prüft, ob ein an der Eingabeeinheit ausgewähltes Speichermedium eine Teilmenge von Datengruppen des ersten Speichermediums oder eine Teilmenge von Datengruppen mindestens eines dritten Speichermediums ist und in Abhängigkeit des ausgewählten Speichermediums entweder das erste Speichermedium oder das mindestens eine dritte Speichermedium in eine Abspielposition bringt. Auf diese Weise lassen sich an der Eingabeeinheit des Abspielgerätes auch virtuelle Speichermedien auswählen, deren Daten auf verschiedenen in die Abspielposition des Abspielgerätes bringbare Speichermedien abgelegt sind.

### Zeichnung

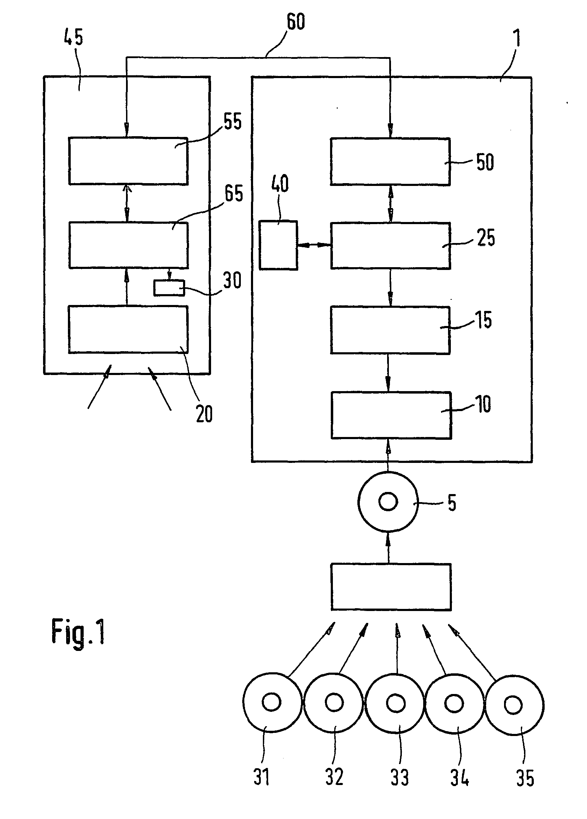

Ausführungsbeispiele der Erfindung sind in der Zeichnung dargestellt und werden in der nachfolgenden Beschreibung näher erläutert.
Es zeigen Figur 1 ein erstes Ausführungsbeispiel eines erfindungsgemäßen Abspielgerätes in Form eines Blockschaltbildes und

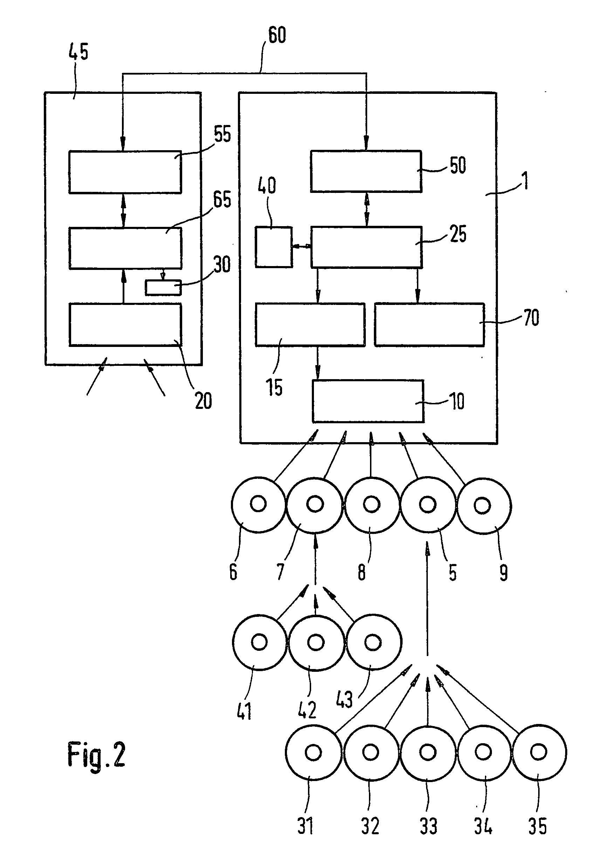

Figur 2 ein zweites Ausführungsbeispiel des erfindungsgemäßen Abspielgerätes in Form eines Blockschaltbildes.

### Beschreibung der Ausführungsbeispiele

In Figur 1 kennzeichnet 1 ein Abspielgerät für Speichermedien. Dabei kann das Abspielgerät 1 beispielsweise zum Abspielen von plattenförmigen Speichermedien, beispielsweise von Compact-Disc's, von Mini-Disc's, von DVD (Digital Versatile Disc), oder dergleichen ausgebildet sein. Das Abspielgerät 1 ist dann entsprechend als Compact-Disc-Spieler, als Mini-Disc-Spieler, als DVD-Spieler oder dergleichen ausgebildet. Auf einem auf dem Abspielgerät 1 abspielbaren Speichermedium sind Daten, beispielsweise in Datenspuren, aufgezeichnet. Das Abspielgerät 1 umfaßt einen Lesekopf 10 zum Auslesen der Daten aus den Datenspuren eines in das Abspielgerät 1 eingelegten ersten Speichermediums 5. Zum Auslesen wird das erste Speichermedium 5 in eine Abspielposition im Abspielgerät 1 gebracht. Das Auslesen mittels des Lesekopfes 10 kann dabei beispielsweise optisch mittels eines auf das Speichermedium fokussierten und von dort reflektierten Laserstrahls erfolgen. Das Abspielgerät 1 umfaßt weiterhin eine mit dem Lesekopf 10 verbundene Lesekopfsteuerung 15 zur Positionierung des Lesekopfes 10 über einer auszulesenden Datenspur des ersten Speichermediums 5. Das Abspielgerät 1 umfaßt weiterhin eine Umsetzvorrichtung 25, die ebenfalls an die Lesekopfsteuerung 15 angeschlossen ist und die zusätzlich mit einem Speicher 40 des Abspielgerätes 1 verbunden sein kann. Gemäß Figur 1 ist weiterhin eine dem Abspielgerät 1 zugeordnete Eingabeeinheit 20 vorgesehen. Diese kann als Teil des Abspielgerätes 1 selbst ausgebildet oder wie in Figur 1 dargestellt, vom Abspielgerät 1 abgesetzt angeordnet sein. Die Eingabeeinheit 20 steht mit der Umsetzvorrichtung 25 in Verbindung. Entsprechend kann wie in Figur 1 eine Anzeigevorrichtung 30 vorgesehen sein, die ebenfalls als Teil des Abspielgerätes 1 selbst ausgebildet oder wie in Figur 1 dargestellt, abgesetzt vom Abspielgerät 1 angeordnet sein kann und gegebenenfalls mit der Umsetzvorrichtung 25 in Verbindung steht.

Bei dem in Figur 1 dargestellten ersten Ausführungsbeispiel ist das Abspielgerät 1 mit einem Rundfunkempfänger 45 verbunden. Der Rundfunkempfänger 45 kann beispielsweise als Autoradio ausgebildet sein. Zum Anschluß an den Rundfunkempfänger 45 umfaßt das Abspielgerät 1 eine erste Schnittstelle 50 und der Rundfunkempfänger eine zweite Schnittstelle 55. Die beiden Schnittstellen 50, 55 sind über eine Busleitung 60 miteinander verbunden. Die Eingabeeinheit 20 und die Anzeigevorrichtung 30 des Abspielgerätes 1 fungieren hier gleichzeitig als Eingabeeinheit und Anzeigevorrichtung des Rundfunkempfängers 45 und sind jeweils über eine.Steuerung 65 des Rundfunkempfängers 45 an die zweite Schnittstelle 55 angeschlossen.

Je nach Ausbildung der zweiten Schnittstelle 55 und der Busleitung 60 kann an den Rundfunkempfänger 45 ein Abspielgerät 1 angeschlossen werden, in das gemäß dem ersten Ausführungsbeispiel nach Figur 1 nur ein einziges Speichermedium einführbar ist oder in das nach einer zweiten Ausführungsform nach Figur 2 mehrere Speichermedien gleichzeitig eingeführt sein können und das beispielsweise als Compact-Disc-Wechsler, als Mini-Disc-Wechsler, als DVD-Disc-Wechsler, oder dergleichen ausgebildet sein kann. Damit an den Rundfunkempfänger 45 sowohl ein Abspielgerät gemäß der ersten Ausführungsform als auch ein Abspielgerät gemäß der zweiten Ausführungsform anschließbar ist, ermöglicht die Eingabeeinheit 20 sowohl die Auswahl eines Speichermediums als auch die Auswahl einer auf dem ausgewählten Speichermedium abgelegten Datengruppe, beispielsweise eines Musiktitels oder eines Video-Clips. Dabei kann die Einabeeinheit 20 zur Auswahl des Speichermediums mindestens eine Scroll-Taste aufweisen, mittels der an der Anzeigevorrichtung 30 eines von den im Abspielgerät 1 befindlichen Speichermedien zum Abspielen ausgewählt werden kann. Entsprechend kann die Auswahl einer Datengruppe erfolgen, für die an der Eingabeeinheit 20 ebenfalls mindestens eine Scroll-Taste vorgesehen sein kann. Die Eingabeeinheit 20 kann weiterhin eine Bestätigungs-Taste umfassen, durch deren Betätigung das ausgewählte Speichermedium und die ausgewählte Datengruppe jeweils bestätigt werden, so dass der Abspielvorgang eingeleitet werden kann.

Im folgenden wird nun gemäß der ersten Ausführungsform nach Figur 1 der Fall betrachtet, dass auf dem ersten Speichermedium 5 eine Vielzahl von Datengruppen abgelegt ist. Um Speicherplatz auf dem ersten Speichermedium 5 zu sparen, können die Datengruppen mittels eines in Figur 1 durch das Bezugszeichen 75 gekennzeichneten Kompressionsverfahrens kodiert werden. Als Kompressionsverfahren eignet sich beispielsweise das MP3-Verfahren (MPEG Layer-3; MPEG = Motion Picture Expert Group). Wird nun das erste Speichermedium 5 in das Abspielgerät 1 eingeführt, so liest der Lesekopf 10 zunächst einen so genannten Einlaufbereich oder TOC-Bereich des ersten Speichermediums 5 aus, in dem ein Inhaltsverzeichnis der auf dem ersten Speichermedium 5 gespeicherten Daten abgelegt ist. Aus diesem Inhaltsverzeichnis entnimmt die Umsetzvorrichtung 25, der diese Informationen zugeführt sind, die Zahl der auf dem ersten Speichermedium 5 gespeicherten Datengruppen. Überschreitet diese Zahl einen vorgegebenen Wert, so faßt die Umsetzvorrichtung 25 die auf dem ersten Speichermedium 5 abgelegten Datengruppen in mindestens zwei Teilmengen zusammen, wobei sich die Datengruppen verschiedener Teilmengen sinnvollerweise, aber nicht zwangsläufig voneinander unterscheiden können und die Zahl der zu bildenden Teilmengen so gewählt ist, dass die Anzahl der Datengruppen in keiner Teilmenge über den vorgegebenen Wert liegt. Die Umsetzvorrichtung 25 fasst die Datengruppen des ersten Speichermediums 5 beispielsweise in fünf Teilmengen 31, 32, 33, 34, 35 zusammen. Durch die Datenkompression lassen sich also die Daten der 5 Teilmengen 31, 32, 33, 34, 35 allein auf dem ersten Speichermedium 5 ablegen. Die Umsetzvorrichtung 25 sendet dann über die Busleitung 60 Informationen über die gebildeten Teilmengen 31, 32, 33, 34, 35 sowie über die in ihnen jeweils enthaltenen Datengruppen an den Rundfunkempfänger 45. Über die Steuerung 65 können diese Informationen an der Anzeigevorrichtung 30 wiedergegeben werden. Diese Wiedergabe kann automatisch erfolgen, sobald die Steuerung 65 die entsprechenden Informationen von der Umsetzvorrichtung 25 erhalten hat. Die einzelnen Teilmengen 31,32, 33, 34, 35 können dabei jeweils einzeln mit den jeweils in ihnen enthaltenen Datengruppen an der Anzeigevorrichtung 30 wiedergegeben werden. Die Informationen jeder Teilmenge 31,32, 33, 34, 35 können dabei wie die Informationen jeweils eines Speichermediums an der Anzeigevorrichtung 30 wiedergegeben werden. Eine solche Wiedergabe kann auch in der Eingabeeinheit 20 vom Benutzer des Rundfunkempfänger 45 veranlaßt werden, beispielsweise im Sinne einer Editierung. Auf diese Weise kann der Benutzer mittels einer alphanumerischen Tastatur an der Eingabeeinheit 20 eine Benennung der einzelnen Teilmengen 31,32, 33, 34, 35 durchführen, wobei dann jede Teilmenge 31,32, 33, 34, 35 wie ein eigenes Speichermedium behandelt und mit einem Namen versehen wird. Die Steuerung 65 kann diese Namensinformationen über die zweite Schnittstelle 55, die Busleitung 60 und die erste Schnittstelle 50 an die Umsetzvorrichtung 25 weiterleiten, die die einzelnen Namen in Zuordnung zu den gebildeten Teilmengen 31, 32, 33, 34, 35 im Speicher 40 ablegt. An der Eingabeeinheit 20 ist nun jede der gebildeten Teilmengen 31, 32, 33, 34, 35 als unterschiedliches Speichermedium mit den dafür vorgesehenen Scroll-Tasten auswählbar. Die Teilmengen 31, 32, 33, 34, 35 sind dabei an der Anzeigevorrichtung entweder durch die vom Benutzer vergebenen Namen oder, wenn kein solcher vorliegt, durch einen originär, von der Umsetzvorrichtung 25 vergebenen Namen, gekennzeichnet.

Je nach Auswahl einer Teilmenge 31, 32, 33, 34, 35 an der Eingabeeinheit 20 wird der Lesekopf 10 dann, solange diese Auswahl Gültigkeit hat, nur in den Bereichen des ersten Speichermediums 5 von der Lesekopfsteuerung 15 positioniert, in denen Datengruppen der ausgewählten Teilmenge 31, 32, 33, 34, 35 abgelegt sind. Dabei können die Teilmengen 31, 32, 33, 34, 35 so gebildet sein, dass ihre Datengruppen auf dem ersten Speichermedium 5 einander benachbart angeordnet sind, um größere Spursprünge des Lesekopfes 10 beim Wechseln von Datengruppen innerhalb der selben Teilmenge 31, 32, 33, 34, 35 zu vermeiden. Die Datengruppen der jeweiligen Teilmengen 31, 32, 33, 34, 35 müssen aber nicht notwendigerweise einander benachbart sein.

Da nun die einzelnen Teilmengen 31, 32, 33, 34, 35 jeweils wie ein eigenes Speichermedium für den Benutzer an der Anzeigevorrichtung 30 wiedergegeben und mittels der Eingabeeinheit 20 auswählbar sowie benennbar sind, wird die Bedienung des Abspielgerätes 1 und insbesondere die Auswahl von Datengruppen aus dem ersten Speichermedium 5 für den Benutzer erheblich übersichtlicher und weniger zeitaufwendig. So kann der Benutzer mittels der Eingabeeinheit 20 wie für ein herkömmliches Speichermedium eine Abspielreihenfolge, zumindest eines Teiles der in einer gerade an der Anzeigevorrichtung 30 editierten Teilmenge 31, 32, 33, 34, 35 enthaltenen Datengruppen programmieren.

Im folgenden wird nun beschrieben, wie die Auswahl einer Teilmenge 31, 32, 33, 34, 35 und einer Datengruppe der ausgewählten Teilmenge durch den Benutzer an der Eingabeeinheit 20 in die entsprechende Datengruppe des ersten Speichermediums 5 zur korrekten Positionierung des Lesekopfes 10 umgesetzt wird. Der Benutzer wählt dabei an der Eingabeeinheit 20 zunächst, beispielsweise durch Eingabe des Namens, an der alphanumerischen Tastatur oder durch Scrollen durch an der Anzeigevorrichtung 30 dargestellte Namen ein gewünschtes Speichermedium bzw. eine gewünschte Teilmenge 31, 32, 33, 34, 35 aus. Anschließend gibt er entweder mittels der alphanumerischen Tastatur oder ebenfalls durch Scrollen der entsprechenden Nummern an der Anzeigevorrichtung 30 eine auf die ausgewählte Teilmenge 31, 32, 33, 34, 35 bezogene Datengruppennummer aus. Die einzelnen Datengruppen einer jeden Teilmenge 31, 32, 33, 34, 35 können dabei beispielsweise von 1 an durchnummeriert sein. Für dieses Beispiel soll angenommen werden, dass der Benutzer an der Eingabeeinheit 20 den Namen der dritten Teilmenge 33 und die Datengruppennummer zwei ausgewählt hat. Die Daten werden dann von der Steuerung 65 über die zweite Schnittstelle 55, die Busleitung 60 und die erste Schnittstelle 50 an die Umsetzvorrichtung 25 übertragen. Die Umsetzvorrichtung 25 ermittelt nun durch Vergleich des vom Benutzer gewählten Namens mit den im Speicher 40 abgelegten Namen die zugeordnete dritte Teilmenge 33, deren Adressdaten im Speicher 40 in Zuordnung zu diesem Namen abgelegt sind. Die Adressdaten geben dabei die Positionen der zu der dritten Teilmenge 33 gehörenden Datengruppen auf dem ersten Speichermedium 5 an. Anhand der vom Benutzer gewählten Datengruppennummer zwei können dann die Adressdaten für die entsprechende Datengruppe auf dem ersten Speichermedium 5, die in Zuordnung zu der Datengruppennummer zwei für die dritte Teilmenge 33 im Speicher 40 abgelegt sind, ermittelt werden. Die Umsetzvorrichtung 25 steuert dann die Lesekopfsteuerung 15 zur Positionierung des Lesekopfes 10 an der Anfangsadresse dieser Datengruppe auf dem Speichermedium 5 an. Anschließend wird diese Datengruppe vom Lesekopf 10 ausgelesen und an einer in der Figur nicht dargestellten Wiedergabevorrichtung zur Wiedergabe gebracht.

Wenn beim ersten Ausführungsbeispiel nach Figur 1 die Zahl der Datengruppen auf dem ersten Speichermedium 5 kleiner oder gleich dem vorgegebenen Wert ist, so findet keine Aufteilung in Teilmengen statt und das Abspielgerät 1 funktioniert in herkömmlicher Weise, beispielsweise wie ein Compact-Disc-Spieler, ein Mini-Disc-Spieler oder ein DVD-Spieler. Eine Auswahl verschiedener Speichermedien an der Eingabeeinheit 20 ist dann nicht möglich, auch wenn eine solche Eingabe prinzipiell vorgesehen ist.

In Figur 2 ist eine zweite Ausführungsform des erfindungsgemäßen Abspielgerätes 1 dargestellt, wobei gleiche Bezugszeichen gleiche Elemente kennzeichnen wie beim ersten Ausführungsbeispiel nach Figur 1. Dabei entspricht der Rundfunkempfänger 45 des zweiten Ausführungsbeispiels nach Figur 2 demjenigen der ersten Ausführungsform nach Figur 1. Das Abspielgerät 1 hingegen ist nun als Wechsler ausgebildet, beispielsweise als Compact-Disc-Wechsler, in den gleichzeitig mehrere Speichermedien eingeführt sein können. Dazu umfaßt das Abspielgerät 1 zusätzlich eine Liftsteuerung 70, die einen in Figur 2 nicht dargestellten Verschiebemechanismus ansteuert, um ein ausgewähltes Speichermedium in eine Abspielposition zu bringen, in der die auf dem ausgewählten Speichermedium abgelegten Daten vom Lesekopf 10 ausgelesen werden können. Die in das Abspielgeräte 1 eingeführten Speichermedien können dabei beispielsweise in einem Magazin gestapelt sein und von dort mittels des Verschiebemechanismus in die Abspielposition verbracht oder aus der Abspielposition in das Magazin zurück transportiert werden. Beispielhaft sollen dabei das bereits aus dem ersten Ausführungsbeispiel nach Figur 1 bekannte erste Speichermedium 5, ein zweites Speichermedium 6, ein drittes Speichermedium 7, ein viertes Speichermedium 8 und ein fünftes Speichermedium 9 in dem in Figur 2 nicht dargestellten Magazin des Abspielgerätes 1 abgelegt sein. Aufgrund der bereits im ersten Ausführungsbeispiel beschriebenen Prüfung, ob die Zahl der Datengruppen des jeweiligen Speichermediums 5, 6, 7, 8, 9 den vorgegebenen Wert überschreitet, kommt die Umsetzvorrichtung 25 beim zweiten Ausführungsbeispiel zu dem für das erste Speichermedium 5 bekannten Ergebnis der Aufteilung in fünf Teilmengen 31, 32, 33, 34, 35 und beim dritten Speichermedium 7 zur Aufteilung in drei Teilmengen 41, 42, 43. Die Aufteilung in die Teilmengen erfolgt dabei wie bereits im ersten Ausführungsbeispiel beschrieben. Während dem Benutzer beim ersten Ausführungsbeispiel noch fünf Speichermedien zur Auswahl mittels der Eingabeeinheit 20 angeboten wurden, so sind es beim zweiten Ausführungsbeispiel elf, nämlich die erste Teilmenge 31, die zweite Teilmenge 32, die dritte Teilmenge 33, die vierte Teilmenge 34, die fünfte Teilmenge 35, das zweite Speichermedium 6, die sechste Teilmenge 41, die siebte Teilmenge 42, die achte Teilmenge 43, das vierte Speichermedium 8 und das fünfte Speichermedium 9. Sämtliche Teilmengen 31, 32, 33, 34, 35, 41, 42, 43 werden dabei wie auch beim ersten Ausführungsbeispiel von der Umsetzvorrichtung 25 als eigenes Speichermedium interpretiert, so dass die Umsetzvorrichtung 25 über die erste Schnittstelle 50, die Busleitung 60 und die zweite Schnittstelle 55 Informationen über elf Speichermedien an die Steuerung 65, insbesondere zur Anzeige an der Anzeigevorrichtung 30 überträgt. Die gebildeten Teilmengen 31, 32, 33, 34, 35, 41, 42, 43 stellen dabei virtuelle Speichermedien im Gegensatz zu den tatsächlich vorhandenen Speichermedien 5, 6, 7, 8, 9 dar. Dies ist aber für den Benutzer nicht erkennbar. Er kann die Speichermedien in der im ersten Ausführungsbeispiel beschriebenen Weise mit Namen versehen oder für eines oder mehrere der Speichermedien eine Abspielreihenfolge programmieren, unabhängig davon, ob das jeweilige Speichermedium virtuell oder real vorhanden ist. Im Speicher 40 ist dem vom Benutzer vergebenen Namen entweder eine Adressinformation einer Teilmengen 31, 32, 33, 34, 35, 41, 42, 43 sowie das zugehörige Speichermedium 5, 7 oder das direkt entsprechende Speichermedium 6, 8, 9 zugeordnet. Letzteres nur, wenn die Anzahl der Datengruppen auf dem entsprechenden Speichermedium kleiner oder gleich dem vorgegebenen Wert ist und daher keine Teilmengen gebildet wurden. Zur Auswahl des richtigen Speichermediums bzw. der richtigen Teilmenge muss die Umsetzvorrichtung 25 beim zweiten Ausführungsbeispiel eine erweiterte Funktionalität umfassen und prüfen, ob der vom Benutzer an der Eingabeeinheit 20 eingegebene Name eine Teilmenge und damit ein virtuelles Speichermedium oder ein reales Speichermedium ist. Dazu vergleicht die Umsetzvorrichtung 25 den vom Benutzer an der Eingabeeinheit 20 eingegebenen Namen mit den im Speicher 40 abgelegten Namen. Ist dem eingegebenen Namen dabei direkt ein reales Speichermedium 6, 8, 9 zugeordnet, so veranlaßt die Umsetzvorrichtung 25 die Liftsteuerung 70 zur Verbringung des ausgewählten Speichermediums 6, 8, 9 in die Abspielposition, wenn dieses Speichermedium nicht bereits in der Abspielposition vorliegt. Ist dem eingegebenen Namen ein virtuelles Speichermedium, also eine der Teilmengen 31, 32, 33, 34, 35, 41, 42, 43 im Speicher 40 zugeordnet, so prüft die Umsetzvorrichtung 25 weiterhin, ob dieser Teilmenge im Speicher 40 das erste Speichermedium 5 oder das dritte Speichermedium 7 zugeordnet ist und veranlaßt die Liftsteuerung 70 zur Verbringung des entsprechend zugeordneten Speichermediums in die Abspielposition, wenn dieses Speichermedium nicht bereits in der Abspielposition vorliegt.

Die Ermittlung der vom Benutzer an der Eingabeeinheit 20 ausgewählten Datengruppe durch die Umsetzvorrichtung 25 erfolgt dann wie beim ersten Ausführungsbeispiel beschrieben, wenn der Benutzer mit der Eingabeeinheit 20 eine Teilmenge und somit ein virtuelles Speichermedium ausgewählt hat. Hat der Benutzer ein reales Speichermedium 6, 8, 9 ausgewählt, so korrespondiert die vom Benutzer ebenfalls an der Eingabeeinheit 20 ausgewählte Datengruppennummer im Speicher 40 ebenfalls mit entsprechenden Adressdaten, die den Ort der abzuspielenden Datengruppe auf dem gewünschten Speichermedium kennzeichnen, so dass die Umsetzvorrichtung 25 die Lesekopfsteuerung 15 zur Positionierung des Lesekopfes 10 am Anfang dieser Datengruppe auf dem gewählten Speichermedium 6, 8, 9 positionieren kann.

Der Rundfunkempfänger 45 und das Abspielgerät 1 können in einem gemeinsamen Gehäuse oder wie in den beiden Ausführungsbeispielen dargestellt, körperlich voneinander getrennt ausgeführt sein.

Der Daten- und Informationsaustausch über die Busleitung 60 kann nach einem vorgegebenen Nachrichtenkatalog und einem vorgegebenen Protokoll durchgeführt werden, wobei die Steuerung 65 die für das Abspielgerät 1 bestimmten Benutzereingaben an der Eingabeeinheit 20 in entsprechende Kommandos umwandelt, die dann über die zweite Schnittstelle 55 auf die Busleitung 60 unter Verwendung des vorgegebenen Nachrichtenkataloges und des vorgegebenen Protokolls zur Übertragung an das Abspielgerät 1 ausgegeben werden.

## Patentansprüche

1. Abspielgerät (1) für Speichermedien (5, 6, ..., 9) mit einer Anzahl von Datengruppen, wobei ein Lesekopf (10) zum Auslesen der Daten eines ersten Speichermediums (5) und eine Lesekopfsteuerung (15) zur Positionierung des Lesekopfes (10) im Bereich einer auf dem ersten Speichermedium (5) abgelegten abzuspielenden Datengruppe vorgesehen sind, wobei weiterhin eine Eingabeeinheit (20) vorgesehen ist, an der einerseits unterschiedliche Speichermedien und andererseits unterschiedliche Datengruppen auf einem ausgewählten Speichermedium zum Abspielen auswählbar sind, **dadurch gekennzeichnet, dass** eine Umsetzvorrichtung (25) vorgesehen ist, die bei Überschreiten eines vorgegebenen Wertes durch die Anzahl von Datengruppen auf dem ersten Speichermedium (5) mindestens zwei Teilmengen (31, 32, ...,35) aus der Anzahl von Datengruppen des ersten Speichermediums (5) bildet, wobei jede dieser Teilmengen (31, 32, ...,35) an der Eingabeeinheit (20) als unterschiedliches Speichermedium auswählbar ist, und dass die Umsetzvorrichtung (25) die Lesekopfsteuerung (15) in Abhängigkeit der als Speichermedium an der Eingabeeinheit (20) ausgewählten Teilmenge (31, 32, ...,35) zur Positionierung des Lesekopfes (10) ansteuert.

2. Abspielgerät (1) nach Anspruch 1, **dadurch gekennzeichnet, dass** eine Anzeigevorrichtung (30) vorgesehen ist, an der jeweils eine der Teilmengen (31, 32, ...,35) mit Informationen über die in ihr enthaltenen Datengruppen wiedergebbar ist.

3. Abspielgerät (1) nach Anspruch 2, **dadurch gekennzeichnet, dass** jeweils eine der Teilmengen (31, 32, ...,35) an der Anzeigevorrichtung (30) editierbar ist.

4. Abspielgerät (1) nach Anspruch 3, **dadurch gekennzeichnet, dass** mittels der Eingabeeinheit (20) der editierten Teilmenge (31, 32, ...,35) ein Name zuweisbar und in einem Speicher (40) in Zuordnung zu dieser Teilmenge (31, 32, ...,35) ablegbar ist.

5. Abspielgerät (1) nach Anspruch 3 oder 4, **dadurch gekennzeichnet, dass** mittels der Eingabeeinheit (20) eine Abspielreihenfolge zumindest eines Teils der in der editierten Teilmenge (31, 32, ...,35) enthaltenen Datengruppen programmierbar ist.

6. Abspielgerät (1) nach einem der vorherigen Ansprüche, **dadurch gekennzeichnet, dass** die Umsetzvorrichtung (25) ein an der Eingabeeinheit (20) ausgewähltes Speichermedium der entsprechenden Teilmenge (31, 32, ...,35) von Datengruppen des ersten Speichermediums (5) zuordnet, dass die Umsetzvorrichtung (25) anhand dieser Teilmenge (31, 32, ...,35) und anhand einer an der Eingabeeinheit (20) ausgewählten und auf diese Teilmenge (31, 32, ...,35) bezogenen Datengruppennummer den Ort der entsprechenden Datengruppe auf dem ersten Speichermedium (5) ermittelt und dass die Umsetzvorrichtung (25) anhand dieses Ortes die Lesekopfsteuerung (15) zur Positionierung des Lesekopfes (10) am Beginn der entsprechenden Datengruppe auf dem ersten Speichermedium (5) ansteuert.

7. Abspielgerät (1) nach einem der vorherigen Ansprüche, **dadurch gekennzeichnet, dass** die Umsetzvorrichtung (25) prüft, ob ein an der Eingabeeinheit (20) ausgewähltes Speichermedium mindestens ein zweites Speichermedium (6, 8, 9) oder eine Teilmenge (31, 32, ...,35) von Datengruppen des ersten Speichermediums (5) ist, und in Abhängigkeit des ausgewählten Speichermediums entweder das erste Speichermedium (5) oder das mindestens eine zweite Speichermedium (6, 8, 9) in eine Abspielposition bringt.

8. Abspielgerät (1) nach einem der vorherigen Ansprüche, **dadurch gekennzeichnet, dass** die Umsetzvorrichtung (25) prüft, ob ein an der Eingabeeinheit (20) ausgewähltes Speichermedium eine Teilmenge (31, 32, ...,35) von Datengruppen des ersten Speichermediums (5) oder eine Teilmenge (41, 42, 43) von Datengruppen mindestens eines dritten Speichermediums (7) ist und in Abhängigkeit des ausgewählten Speichermediums entweder das erste Speichermedium (5) oder das mindestens eine dritte Speichermedium (7) in eine Abspielposition bringt.

## Claims

1. Player (1) for storage media (5, 6, ..., 9) having a number of data groups, where a read head (10) for reading the data from a first storage medium (5) and a read head controller (15) for positioning the read head (10) in the region of a data group to be played which is stored on the first storage medium (5) are provided, and where an input unit (20) is provided on which firstly different storage media and secondly different data groups on a selected storage medium can be selected for play, **characterized in that** a conversion apparatus (25) is provided which, when the number of data groups on the first storage medium (5) exceeds a prescribed value, forms at least two subsets (31, 32, ..., 35) from the number of data groups on the first storage medium (5), each of these subsets (31, 32, ..., 35) being able to be selected on the input unit (20) as a different storage medium, and **in that** the conversion apparatus (25) actuates the read head controller (15) to position the read head (10) on the basis of the subset (31, 32, ..., 35) selected as storage medium on the input unit (20).

2. Player (1) according to Claim 1, **characterized in that** a display apparatus (30) is provided which can reproduce a respective one of the subsets (31, 32, ..., 35) with information about the data groups contained in it.

3. Player (1) according to Claim 2, **characterized in that** a respective one of the subsets (31, 32, ..., 35) can be edited on the display apparatus (30).

4. Player (1) according to Claim 3, **characterized in that** the input unit (20) can be used to assign the edited subset (31, 32, ..., 35) a name and to store said name in a memory (40) in association with this subset (31, 32, ..., 35).

5. Player (1) according to Claim 3 or 4, **characterized in that** the input unit (20) can be used to program an order of play for at least one portion of the data groups contained in the edited subset (31, 32, ..., 35).

6. Player (1) according to one of the preceding claims, **characterized in that** the conversion apparatus (25) associates a storage medium selected on the input unit (20) with the appropriate subset (31, 32, ..., 35) of data groups on a first storage medium (5), **in that** the conversion apparatus (25) uses this subset (31, 32, ..., 35) and uses a data group number, which is selected on the input unit (20) and based on this subset (31, 32, ..., 35), to ascertain the location of the appropriate data group on the first storage medium (5), and **in that** the conversion apparatus (25) uses this location to actuate the read head controller (5) to position the read head (10) at the start of the appropriate data group on the first storage medium (5).

7. Player (1) according to one of the preceding claims, **characterized in that** the conversion apparatus (25) checks whether a storage medium selected on the input unit (20) is at least one second storage medium (6, 8, 9) or a subset (31, 32, ..., 35) of data groups on the first storage medium (5), and takes the selected storage medium as a basis for putting either the first storage medium (5) or the at least one second storage medium (6, 8, 9) into a play position.

8. Player (1) according to one of the preceding claims, **characterized in that** the conversion apparatus (25) checks whether a storage medium selected on the input unit (20) is a subset (31, 32, ..., 35) of data groups on the first storage medium (5) or a subset (41, 42, 43) of data groups on at least one third storage medium (7), and takes the selected storage medium as the basis for putting either the first storage medium (5) or the at least one third storage medium (7) into a play position.

## Revendications

1. Lecteur (1) de support d'enregistrement (5, 6,..., 9) comportant un nombre de groupes de données,
une tête de lecture (10) pour lire les données d'un premier support d'enregistrement (5) et une commande de tête de lecture (15) pour positionner la tête de lecture (10) dans la zone d'un groupe de données à lire, enregistrées sur le premier support d'enregistrement (5), et
une unité d'entrée (20) permettant de sélectionner pour leur lecture, d'une part, des supports d'enregistrement différents, et, d'autre part, des groupes de données différents sur un support d'enregistrement sélectionné,
**caractérisé par**
un dispositif de conversion (25) qui, en cas de dépassement d'une valeur prédéfinie par le nombre de groupes de données sur le premier support d'enregistrement (5), forme au moins deux sous-ensembles (31, 32,..., 35) parmi le nombre de groupes de données du premier support d'enregistrement (5),
chacun de ces sous-ensembles (31, 32,..., 35) pouvant être sélectionné par l'unité d'entrée (20) comme support d'enregistrement différent, et
le dispositif de conversion (25) commande la commande de la tête de lecture (15) en fonction des sous-ensembles (31, 32,..., 35) sélectionnés comme supports d'enregistrement par l'unité d'entrée (20) pour positionner la tête de lecture (10).

2. Lecteur (1) selon la revendication 1,
**caractérisé par**
un dispositif d'affichage (30) qui reproduit chacun des sous-ensembles (31, 32,..., 35) avec des informations concernant les groupes de données qu'il contient.

3. Lecteur (1) selon la revendication 1,
**caractérisé en ce que**
chacun des sous-ensembles (31, 32,..., 35) peut être édité par le dispositif d'affichage (30).

4. Lecteur (1) selon la revendication 3,
**caractérisé en ce qu'**
avec l'unité d'entrée (20) on peut attribuer un nom aux sous-ensembles à éditer (31, 32,..., 35) et l'enregistrer dans une mémoire (40) en association avec ce sous-ensemble (31, 32,..., 35).

5. Lecteur (1) selon la revendication 3 ou 4,
**caractérisé en ce qu'**
à l'aide de l'unité d'entrée (20) on programme une série de lecture d'au moins une partie des groupes de données contenus dans le sous-ensemble (31, 32,..., 35) à éditer.

6. Lecteur (1) selon l'une des revendications précédentes,
**caractérisé en ce que**
le dispositif de conversion (25) associe un support d'enregistrement sélectionné par l'unité d'entrée (20) aux sous-ensembles correspondants (31, 32,..., 35) des groupes de données du premier support d'enregistrement (5),
à l'aide de ce sous-ensemble (31, 32,...,35) et d'un numéro de groupes de données sélectionnés par l'unité d'entrée (20) et rapportés à ce sous-ensemble (31, 32,..., 35), le dispositif de conversion (25) détermine l'emplacement du groupe de données correspondant, sur le premier support d'enregistrement (5), et
à l'aide de cet emplacement, le dispositif de conversion (25) commande la commande de tête de lecture (15) pour positionner la tête de lecture (10) au début du groupe de données correspondant, sur le premier support d'enregistrement (5).

7. Appareil de lecture (1) selon l'une des revendications précédentes,
**caractérisé en ce que**
le dispositif de conversion (25) vérifie si un support d'enregistrement sélectionné par l'unité d'entrée (20) est au moins un second support d'enregistrement (6, 8, 9) ou un sous-ensemble (31, 32,..., 35) de groupe de données du premier support d'enregistrement (5), et en fonction du support d'enregistrement sélectionné il met soit le premier support d'enregistrement (5) soit au moins un second support d'enregistrement (6, 8, 9) en position de lecture.

8. Appareil de lecture (1) selon l'une des revendications précédentes,
**caractérisé en ce que**
le dispositif de conversion (25) vérifie si un support d'enregistrement sélectionné par l'unité d'entrée (20) est un sous-ensemble (31, 32,..., 35) de groupe de données du premier support d'enregistrement (5) ou un sous-ensemble (41, 42, 43) de groupe de données d'au moins un troisième support d'enregistrement (7) et en fonction du support d'enregistrement sélectionné, il met soit le premier support d'enregistrement (5) soit au moins un troisième support d'enregistrement (7) en position de lecture.
